# EUROPEAN PATENT APPLICATION

(11) **EP 2 631 119 A2**
(43) Date of publication of application: **28.08.2013**
(21) Application number: 13000058.1
(22) Date of filing: 08.01.2013
(51) Int. Cl.: B60P 1/64, B60P 3/025, B60H 1/00

(54) **Mobile shop**

(30) Priority: 23.02.2012 IT TO20120158
(71) Applicant: B.B.M. Bolpagni S.P.A., 25080 Torbole Casaglia (BS) (IT)
(72) Inventor: Gianpietro, Bolpagni, I-25030 Torbole Casaglia (BS) (IT)
(74) Representative: Garavelli, Paolo

(57) **Abstract**

A mobile shop (1) is described, comprising at least one transport vehicle (3) composed of a chassis placed on wheels (5) and supporting at least one fixed containing caisson (7), the fixed containing caisson (7) being adapted to contain therein at least one mobile containing caisson (9), the mobile containing caisson (9) being equipped with at least one exposition and sales counter or display window (11) and its related tooling and comprising handling means adapted to extract (O₁) the mobile containing caisson (9) from the fixed containing caisson (7), lower (V₁; B₁) the mobile containing caisson (9) with respect to the fixed containing caisson (7) and vice versa.

## Description

The present invention refers to a mobile shop.

The existence of mobile shops is known: they are transported on a transport vehicle, and in particular on chassis with cabin or with integrated cabin of motor vehicles, appendix trolleys, trailers or semi-trailers aimed to store, expose and sale products on the roads.

Such shops are generally equipped with at least one counter or display window for exposition and sales that, in some refurbishing, is mobile inside the flatbed of the transport vehicle to be removed and taken outside in such a way as to expose the products being sold more nearer to the purchasers allowing, at the same time, to increase the volume inside the mobile shop itself. In the same way, it is possible to have removable walls on which tooling are placed that are adapted to store or cook foods. Currently, such removable counters and/or walls are moved towards outside through systems generally comprising shelves suitable to be bent or laterally sliding support beams, actuated by oleo-dynamic, pneumatic, electric or manual actuators placed on the flatbed side, such counter being able to slide onto such shelves or such beams from inside the shop to outside by being tossed till it reaches its final use position. Examples of such systems are disclosed in US-A-4,516,984, US-A-1,599,911, DE-A-9114041, FR-A-2265323, FR-A-1270079, FR-A-2602192, DE-A-102005047557, FR-A-1399785, FR-A-2742975, DE-A-29910630, WO-A-2008/102257, and IT-A-VI2007A000053.

In mobile shops, the counter, though in its exposition and sales position is arranged externally by being tossed, remains always connected to the transport vehicle, compelling this latter one to remain unmoving for the whole sales time and to occupy part of the internal volume of the transport vehicle itself.

Moreover, there are arrangements that allow the sales/exposition counter to be placed on (overturned or translating) flatbeds that are slightly lifted from the ground or even be placed on the ground and freely translate. In particular, such known arrangements do not allow adequately protecting the sales operators from cold, rain or wind.

Therefore object of the present invention is solving the above prior art problems, by providing a mobile shop comprising a vehicle equipped with at least one fixed containing caisson containing therein at least one mobile containing caisson equipped with at least one sales counter and its related tooling, such mobile containing caisson being able to be completely extracted from the transport vehicle and be lowered with respect to such fixed containing caisson, improving the contact with customers.

Another object of the present invention is providing a mobile shop that allows lowering both the sales counter and part of its tooling without renouncing to the vehicle comfort, namely protecting its operators from cold, rain and wind.

Moreover, an object of the present invention is providing a mobile shop in which, once having lowered the containing caisson, the greater internal volume obtained in the transport vehicle can be exploited as room for stocking and/or storage and/or cooking tooling for the products being sold in the sales counter.

The above and other objects and advantages of the invention, as will appear from the following description, are obtained with a mobile shop as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could me made to what is described, without departing from the scope of the invention as appears from the enclosed claims.

The present invention will be better described by some preferred embodiments thereof, provided as a non-limiting example, with reference to the enclosed drawings, in which:
- Figure 1a shows a plan view of a preferred embodiment of the mobile shop according to the present invention in a first operating position thereof;
- Figure 1b shows a cross sectional view of the mobile shop of Figure 1a;

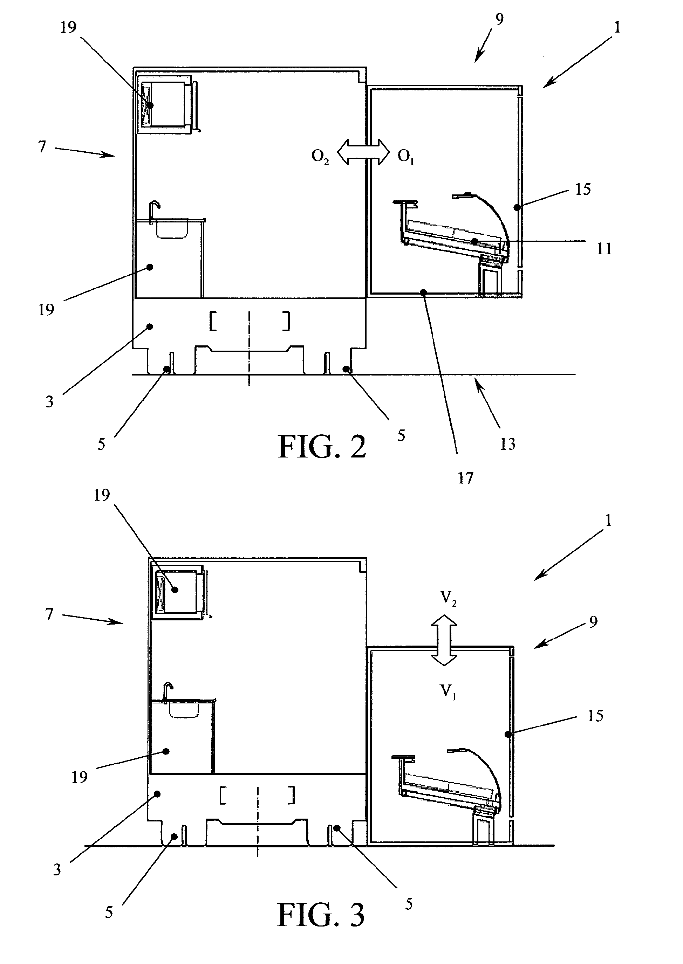

- Figure 2 shows a cross sectional view of the mobile shop of Figure 1a in a second operating position thereof;

- Figure 3 shows a cross sectional view of the mobile shop of Figure 1a in a third operating position thereof;
- Figure 4a shows a cross sectional view of the mobile shop of Figure 1a in a fourth operating position thereof;
- Figure 4b shows a plan view of the mobile shop of Figure 4a;
- Figure 5 shows a plan view of another preferred embodiment of the mobile shop according to the present invention in its fourth operating position;
- Figure 6 shows a cross sectional view of another preferred embodiment of the mobile shop according to the present invention in its third operating position;
- Figure 7 shows a cross sectional view of a further preferred embodiment of the mobile shop according to the present invention in its third operating position;
- Figure 8 shows a cross sectional view of another preferred embodiment of the mobile shop according to the present invention in its third operating position; and
- Figure 9 shows a cross sectional view of a further preferred embodiment of the mobile shop according to the present invention in its third operating position.

With reference to the Figures, it is possible to note that the mobile shop 1 according to the present invention comprises at least one transport vehicle 3 generically composed of a chassis placed on wheels 5 and supporting at least one fixed containing caisson 7, such fixed containing caisson 7 being adapted to contain therein (first operating position) at least one mobile containing caisson 9, such mobile containing caisson 9 being equipped with at least one exposition and sales counter or display window 11 and its related tooling: advantageously, the mobile shop 1 according to the present invention further comprises handling means adapted to extract O₁ (second operating position) such mobile containing caisson 9 from such fixed containing caisson 7, lower V₁, B₁ (third operating position) such mobile containing caisson 9 with respect to such fixed containing caisson 7, possibly placing the mobile containing caisson 9 on the ground 13, and vice versa, namely lift V₂, B₂ such mobile containing caisson 9 takng it back at the same level of such fixed containing caisson 7 and insert O₂ such mobile containing caisson 9 inside such fixed containing caisson 7.

In addition, once having lowered the mobile containing caisson 9 till this latter one rests onto the ground 13, the handling means can be adapted to disengage such mobile containing caisson 9 from the fixed containing caisson 7, consequently making the transport vehicle 3 autonomous and independent in its movements from the mobile containing caisson 9 itself, that remains on the ground, simultaneously allowing to go on with the sales.

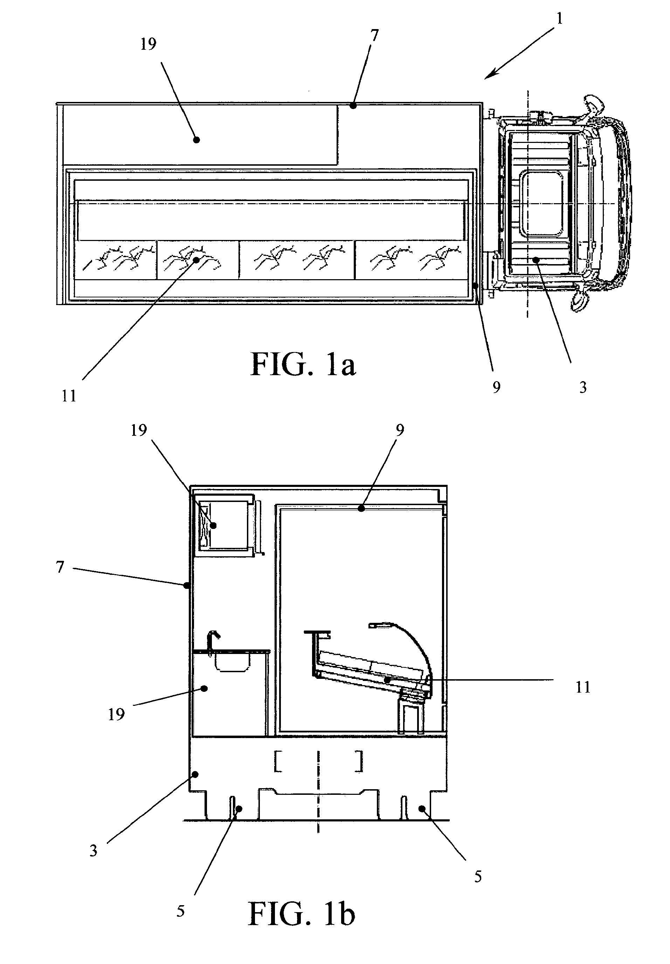

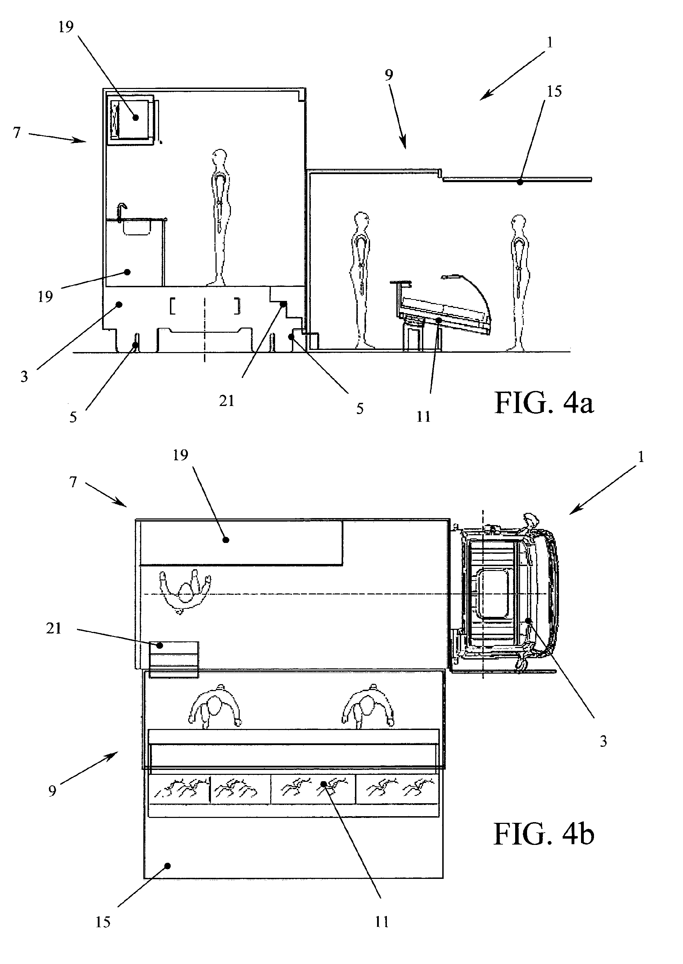

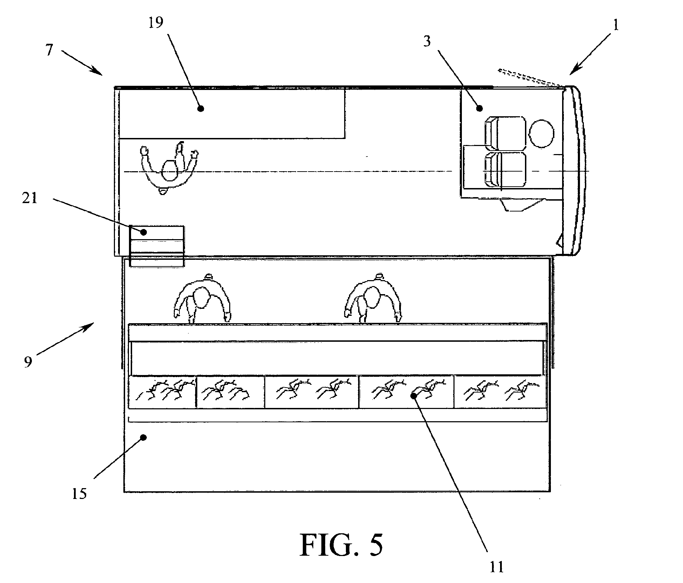

Advantageously, the transport vehicle 3 can indifferentl be a motor vehicle with cabin, as shown for example in Figures 1a and 4b, a motor vehicle with integrated cabin, as shown for example in Figure 5, an appendix trolley, an trailer or a semi-trailer.

In particular, the mobile containing caisson 9 can be equipped with at least one wall adapted to be opened 15, composed for example of at least one door (as shown for example in the Figures) or of at least one gate, that allows accessing from outside to the exposition and sales counter or display window 11 (fourth operating position).

Obviously, the mobile containing caisson 9 can be equipped with a floor 17, such exposition and sales counter O display window 11 being able to be sliding on such floor 17.

Moreover, according to the invention, the floor 17 is equipped with integrated cooling and/or heating systems in order to further improve the comfort of sales operators residing in the mobile containing caisson 9.

Moreover, the fixed containing caisson 7 could be equipped therein with stocking and/or storage and/or cooking tooling 19 for the products being sold in the exposition and sales counter or display window 11.

Obviously, it is possible to provide for passage accesses communicating the fixed containing caisson 7 with the mobile containing caisson 9, for example through external access doors and/or at least one internal stairs 21.

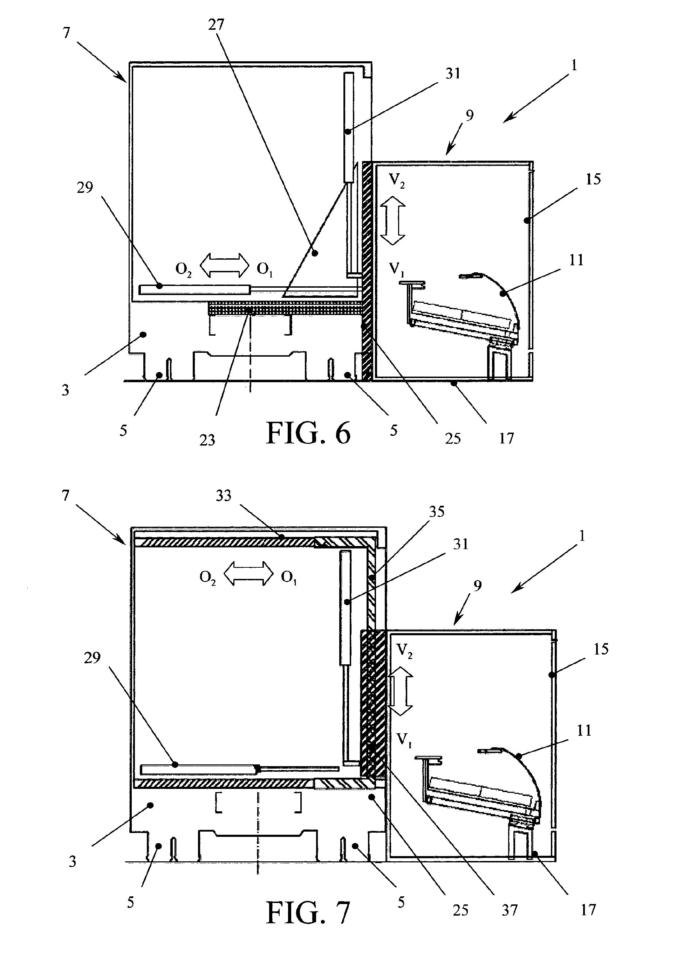

In a preferred embodiment of the mobile shop 1 according to the present invention like the one shown, for example, in Figure 6, the handling means can comprise at least one horizontal sliding guide 23 integral with the fixed containing caisson 7 adapted to allow an horizontal movement (for example along the direction shown by arrow O₁ - O₂) to slide the mobile containing caisson 9 in order to extract or insert this latter one from or into the fixed containing caisson 7, at least one vertical sliding guide 25 integral with the mobile containing caisson 9 adapted to allow a vertical movement (for example along the direction shown by arrow V₁ - V₂) to slide the mobile containing caisson 9 in order to lower or lift this latter one with respect to the fixed containing caisson 7, and at least one slider element 27 sliding along such horizontal sliding guide 23 and such vertical sliding guide 25. The handling means further comprise first actuating means 29 of the horizontal movement O₁ - O₂ and second actuating means 31 of the vertical movement V₁ - V₂.

In another preferred embodiment of the mobile shop 1 according to the present invention come like the one shown, for example, in Figure 7, the handling means can comprise at least one horizontal sliding guide 33 integral with the fixed containing caisson 7, at least one vertical sliding guide 35 horizontally sliding along such horizontal sliding guide 33 to allow the horizontal movement O₁ - O₂ of the mobile containing caisson 9 in order to extract or insert this latter one from or into the fixed containing caisson 7, and at least one slider element 37 integral with the mobile containing caisson 9 and vertically sliding along such vertical sliding guide 35 in order to allow the vertical movement V₁ - V₂ of the mobile containing caisson 9 in order to lower or lift this latter one with respect to the fixed containing caisson 7. Also in this case, the handling means further comprise first actuating means 29 of the horizontal movement O₁ - O₂ and second actuating means 31 of the vertical movement V₁ - V₂.

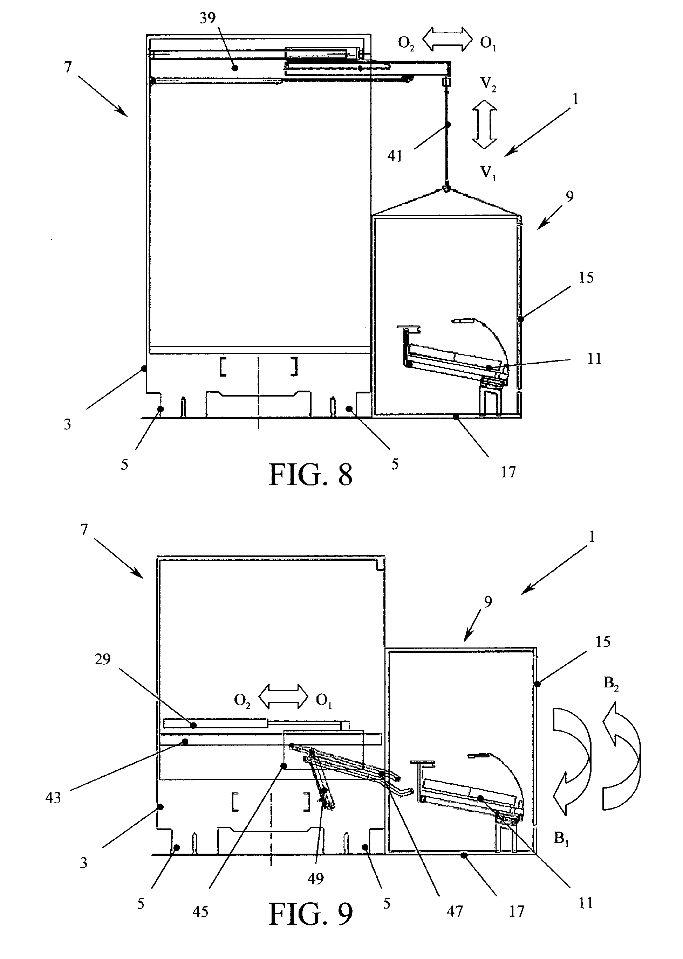

In another preferred embodiment of the mobile shop 1 according to the present invention, like the one shown, for example, in Figure 8, the handling means can comprise at least one horizontally telescopic crane arm 39 integral with the fixed containing caisson 7 and having at least one lifting/lowering cable connected to the mobile containing caisson 9: obviously, the horizontal extension or retraction of the telescopic crane arm 39 allows the horizontal movement O₁ - O₂ of the mobile containing caisson 9 in order to extract or insert this latter one from or into the fixed containing caisson 7, while lifting or lowering the cable 41 allows the vertical movement V₁ - V₂ of the mobile containing caisson 9 in order to lower or lift this latter one with respect to the fixed containing caisson 7.

In another preferred embodiment of the mobile shop 1 according to the present invention, like the one shown, for example, in Figure 9, the handling means can comprise at least one horizontal sliding guide 43 integral with the fixed containing caisson 7 and at least one slider element 45 horizontally sliding along such horizontal sliding guide 43 to allow the horizontal movement O₁ - O₂ of the mobile containing caisson 9 in order to extract or insert this latter one from or into the fixed containing caisson 7, such slider element 45 being connected to the mobile containing caisson 9 by interposing at least one articulated parallelogram kinematism 47 adapted to lower or lift, with respect to the fixed containing caisson 7, the mobile containing caisson 9 through an oscillating movement (for example along the directions shown by arrows B₁ and B₂). Also in this case, the handling means further comprise first actuating means 29 of the horizontal movement O₁ - O₂ and third actuating means 49 of the oscillating movement B₁ - B₂.

Obviously, the above first 29, second 31 and third 47 actuating means can be various and suitable for this purpose, such as, for example, hydraulic pistons (like those, for example, shown in the Figure) actuated by air, oil, with electric operation, air, oil or electric engines, with rack or rope and/or pulley systems.

## Claims

1. Mobile shop (1) comprising at least one transport vehicle (3) composed of a chassis placed on wheels (5) and supporting at least one fixed containing caisson (7), said fixed containing caisson (7) being adapted to contain therein at least one mobile containing caisson (9), said mobile containing caisson (9) being equipped with at least one exposition and sales counter or display window (11) and its related tooling, and comprising handling means adapted to extract (O₁) said mobile containing caisson (9) from said fixed containing caisson (7), lower (V₁; B₁) said mobile containing caisson (9) with respect to said fixed containing caisson (7) and vice versa, **characterised in that** said mobile containing caisson (9) is equipped with a floor (17) equipped with cooling and/or heating systems.

2. Mobile shop (1) comprising at least one transport vehicle (3) composed of a chassis placed on wheels (5) and supporting at least one fixed containing caisson (7), said fixed containing caisson (7) being adapted to contain therein at least one mobile containing caisson (9), said mobile containing caisson (9) being equipped with at least one exposition and sales counter or display window (11) and its related tooling, and comprising handling means adapted to extract (O₁) said mobile containing caisson (9) from said fixed containing caisson (7), lower (V₁; B₁) said mobile containing caisson (9) with respect to said fixed containing caisson (7) and vice versa, **characterised in that** said handling means comprise at least one horizontal sliding guide (43) integral with said fixed containing caisson (7) and at least one slider element (45) horizontally sliding along said horizontal sliding guide (43) to allow an horizontal movement (O₁ - O₂) of said mobile containing caisson (9) in order to extract or insert said mobile containing caisson (9) from or into said fixed containing caisson (7), said slider element (45) being connected to said mobile containing caisson (9) by interposing at least one articulated parallelogram kinematism (47) adapted to lower or lift said mobile containing caisson (9) with respect to said fixed containing caisson (7) through an oscillating movement (B₁ - B₂), said handling means further comprising first actuating means (29) of said horizontal movement (O₁ - O₂) and third actuating means (49) of said oscillating movement (B₁ - B₂) -

3. Mobile shop (1) according to claim 1 or 2, **characterised in that** said transport vehicle (3) is a motor vehicle with cabin, a motor vehicle with integrated cabin, an appendix trolley, a trailer or a semi-trailer.

4. Mobile shop (1) according to claim 1 or 2, **characterised in that** said mobile containing caisson (9) is equipped with at least one wall adapted to be opened (15) to allow an access from outside to said exposition and sales counter or display window (11).

5. Mobile shop (1) according to claim 1 or 2, **characterised in that** said mobile containing caisson (9) is equipped with a floor (17), said exposition and sales counter or display window (11) being sliding on said floor (17).

6. Mobile shop (1) according to claim 1 or 2, **characterised in that** said fixed containing caisson (7) is equipped therein with stocking and/or storage and/or cooking tooling (19).

7. Mobile shop (1) according to claim 1 or 2, **characterised in that** said handling means comprise at least one horizontal sliding guide (23) integral with said fixed containing caisson (7) adapted to allow an horizontal movement (O₁ - O₂) to slide said mobile containing caisson (9) in order to extract or insert said mobile containing caisson (9) from or into said fixed containing caisson (7), at least one vertical sliding guide (25) integral with said mobile containing caisson (9) adapted to allow a vertical movement (V₁ - V₂) to slide said mobile containing caisson (9) in order to lower or lift said mobile containing caisson (9) with respect to said fixed containing caisson (7), and at least one slider element (27) sliding along said horizontal sliding guide (23) and said vertical sliding guide (25), said handling means further comprising first actuating means (29) of said horizontal movement (O₁ - O₂) and second actuating means (31) of said vertical movement (V₁ - V₂).

8. Mobile shop (1) according to claim 1 or 2, **characterised in that** said handling means comprise at least one horizontal sliding guide (33) integral with said fixed containing caisson (7), at least one vertical sliding guide (35) horizontally sliding along said horizontal sliding guide (33) to allow an horizontal movement (O₁ - O₂) of said mobile containing caisson (9) in order to extract or insert said mobile containing caisson (9) form or into said fixed containing caisson (7), and at least one slider element (37) integral with said mobile containing caisson (9) and vertically sliding along said vertical sliding guide (35) to allow a vertical movement (V₁ - V₂) of said mobile containing caisson (9) in order to lower or lift said mobile containing caisson (9) with respect to said fixed containing caisson (7), said handling means further comprising first actuating means (29) of said horizontal movement (O₁ - O₂) and second actuating means (31) of said vertical movement (V₁ - V₂) -

9. Mobile shop (1) according to claim 1 or 2, **characterised in that** said handling means comprise at least one horizontally telescopic crane arm (39) integral with said fixed containing caisson (7) and having at least one lifting/lowering cable connected to said mobile containing caisson (9).
